Europäisches Patentamt

European Patent Office

Office européen des brevets

(19)

(11) Veröffentlichungsnummer: **0 386 315**
**A1**

# (12) EUROPÄISCHE PATENTANMELDUNG

(21) Anmeldenummer: **89118006.9**

(22) Anmeldetag: **28.09.89**

(51) Int. Cl.⁵: **F04D 29/12, F16J 15/40, F16J 15/16**

(30) Priorität: **07.03.89 EP 89103952**

(43) Veröffentlichungstag der Anmeldung:
**12.09.90 Patentblatt 90/37**

(84) Benannte Vertragsstaaten:
**AT CH DE FR GB IT LI NL SE**

(71) Anmelder: **Feodor Burgmann Dichtungswerke GmbH & Co.**
**Äussere Sauerlacher Strasse 6-8**
**D-8190 Wolfratshausen 1(DE)**

(72) Erfinder: **Mathes, Wolfgang**
**Buchauer Strasse 3a**
**D-8000 München 71(DE)**
Erfinder: **Dennes, Peter**
**Wendelsteinstrasse 8**
**D-8023 Grosshesselohe(DE)**
Erfinder: **Reinfrank, Ulrich**
**Margeritenstrasse 26**
**D-8190 Wolfratshausen(DE)**

(74) Vertreter: **Schmidt, Horst, Dr.**
**Siegfriedstrasse 8**
**D-8000 München 40(DE)**

(54) **Abdichtungsvorrichtung sowie damit versehene Pumpe.**

(57) Eine Kreiselpumpe weist zur Abdichtung der Antriebswelle (2) gegenüber dem Pumpengehäuse (1) ein Paar beabstandete, zwischen sich einen Dichtungsraum (15) einschliessende Dichtungsanordnungen (A1,A2) auf. Eine Einrichtung (20-25) ist vorgesehen, um in den Dichtungsraum (15) ein Spülfluid mit einem bestimmten Druck einzuführen. Die produktseitige Dichtungsanordnung (A1) ist so ausgelegt, dass sie unter dem bestimmten Druck im Dichtungsraum (15) öffnet, so dass das Spülfluid längs der Dichtungsanordnung (A1) in den Pumpbereich der Kreiselpumpe strömen kann. Wegen der Spülung durch das Spülfluid ist u.a. der Einsatz einer reibungsverlustarmen Gleitringdichtung (11,12) für die produktseitige Dichtungsanordnung (A1) auch bei Förderung feststoffbeladener Medien möglich.

## Abdichtungsvorrichtung sowie damit versehene Pumpe

Die Erfindung betrifft eine Vorrichtung zum Abdichten einer Welle gegenüber einem Gehäuse sowie eine damit versehene Pumpe.

Die Erfindung bezieht sich insbesondere auf Abdichtungsvorrichtungen für Kreiselpumpen zur Förderung feststoffbeladener Medien, die aufgrund der abrasiven Eigenschaft des Fördermediums erhöhtem Verschleiss unterworfen sind. Insbesondere betroffen hiervon sind Pumpen unter Verwendung verschleissempfindlicher Spalttopfdichtungen in Kombination mit Magnetkupplungen oder Spaltrohrmotoren, während diese Anordnungen andererseits aufgrund ihrer hermetischen Dichtwirkung häufig als atmospärenseitige Abdichtung unumgänglich sind, um den strenger werdenden Umweltschutzvorschriften gerecht zu werden. Es wurde deshalb schon vorgeschlagen, den Pumpraum und die atmosphärenseitige Dichtung durch eine zusätzliche geeignete Schutzdichtung voneinander zu trennen und in den abgetrennten Bereich einen gefilterten Teilstrom des Fördermediums oder eine separate Sperrflüssigkeit einzuführen. Durch diese Massnahme wird zwar wirksam ein erhöhter Verschleiss der atmosphärenseitigen Dichtungseinrichtung und gleichzeitig eine erhöhte Sicherheit gegen einen Austritt des Fördermediums an die Umgebung erzielt, doch ist die zusätzliche produkfseitige Schutzdichtung weiterhin dem abrasiven, ggf. korrosiven und damit die Lebensdauer bzw. Funktion der Dichtung beeinträchtigenden Angriff des Fördermediums ausgesetzt. Vorgeschlagen wurde ferner auch schon das Vorsehen einer hydrodynamischen Wellenabdichtung zusätzlich zur atmosphärenseitigen Dichtung, die während des Betriebes der Pumpe das feststoffbeladene Medium an einem uneingeschränkten Zutritt zu der atmosphärenseitigen Dichtung hindern kann. Die hydrodynamische Wellenabdichtung ist jedoch nicht nur während des Stillstandes, sondern auch während der An- und Abfahrphasen der Pumpe unwirksam. Die bekannten Abdichtungsmassnahmen sind ferner nicht geeignet, die Ablagerung von Feststoffpartikeln an Bereichen im Inneren des Pumpengehäuses zu verhindern oder wenigstens zu verringern, die ausserhalb der eigentlichen Abdichtungszone liegen; solche Ablagerungen können das Betriebsverhalten der Pumpe jedoch ebenfalls massgeblich beeinträchtigen.

Der Erfindung liegt demgegenüber die Aufgabe zugrunde, eine Abdichtungsvorrichtung der eingangs erwähnten Gattung zu schaffen, deren Wirksamkeit in Gegenwart insbesondere feststoffbeladener Medien bei gleichzeitig verbesserter Sicherung gegen bruchbedingte Leckaustritte über verlängerte Betriebszeiten gewährleistet ist. Die Vorrichtung soll ferner den Einsatz verschleissempfindlicher hermetischer Abdichtungseinrichtungen in Verbindung mit feststoffbeladenen Medien vereinfachen.

Diese Aufgabe wird erfindungsgemäss durch die Merkmale im kennzeichnenden Teil des Patentanspruches 1 gelöst.

Der zwischen dem Paar beabstandeter Dichtungsanordnungen gebildete Dichtungsraum kann unabhängig vom Fördermedium nicht nur mit einem geeigneten, insbesondere festkörperfreien Druckfluid beaufschlagt werden, sondern es lässt sich erfindungsgemäss zusätzlich gezielt eine Verbindung zwischen dem Inneren des Dichtungsraumes und einem produktseitigen Aussenbereich oder Vorraum der Dichtung herstellen, in den grundsätzlich das abzudichtende Fördermedium eindringen kann. Das in den Vorraum einströmende Druckfluid wirkt dabei wie eine Spülflüssigkeit, indem es bei der Strömung längs der beaufschlagten Bereiche, vorzugsweise einschliesslich der produktseitigen Dichtungsanordnung, anhaftende abrasive Feststoffpartikel mitreissen kann. Die Spülung kann leicht auf die jeweiligen Betriebsverhältnisse optimiert werden. Sie kann, wenn erwünscht, z.B. insbesondere periodisch über geeignete Zeitintervalle, während der An- oder Abfahrpase, des Stillstandes oder in irgendeiner gewünschten Kombination der Betriebsphasen der abzudichtenden Einrichtung oder Pumpe erfolgen. Schliesslich bedeutet das Vorsehen eines Paares voneinander unabhängiger Dichtungsanordnungen eine erhöhte Sicherheit gegen einen Austritt des Fördermediums bei Bruch einer Dichtungsanordnung, indem die Funktion der anderen weiterhin voll erhalten bleibt.

Die Erfindung ermöglicht ferner den Einsatz reibungsverlustarmer Gleitringdichtungen sowohl für die atmosphären- als produktseitige Abdichtung oder eine Kombination einer produktseitigen Gleitringdichtung mit einer atmosphärenseitigen Spalttopf- bzw. Spaltrohrdichtung. Dadurch wird der Vorteil einer im wesentlichen hermetischen produktseitigen Abdichtung nicht nur während des Betriebes, sondern auch Stillstandes der abzudichtenden Einrichtung erzielt, so dass auch während dieser Betriebsphasen die verschleissempfindliche atmosphärenseitige Dichtungsanordnung ausreichend geschützt ist.

Während die atmosphärenseitige Dichtungsanordnung eine Gleitringdichtung grundsätzlich bekannter Bauart sein kann, hat die produktseitige Gleitringdichtung vorzugsweise einen Aufbau gemäss den Merkmalen der Patentansprüche 2 bis 4. D.h. der stationäre Dichtungsteil gelangt unter dem bestimmten Druck des Druckfluides im Dichtungsraum ausser dichtendem Eingriff mit dem beweglichen Dichtungsteil, so dass das Druckmedium bei seiner Strömung in den Dichtungsvorraum die beschriebene reinigende Wirkung an den Dichtflächen dieser Dichtung ausüben kann. Dagegen bewirkt ein Überdruck in besagtem Vorraum, dass die dichtende Eingriffnahme zwischen den beiden Dichtungsteilen verstärkt wird.

Gemäss einer anderen bevorzugten Weiterbildung der Erfindung kann vorgesehen sein, dass den vorerwähnten Dichtungsanordnungen produktseitig eine hydrodynamische Dichtungsanordnung oder Wellenabdichtung an sich bekannter Bauart vorgeschaltet ist. Dabei kann gleichzeitig eine Durchspülung der hydrodynamischen Dichtungsanordnung erhalten werden, was deren Wirksamkeit über verlängerte Betriebszeiten sicherstellt.

Bei Einsatz der erfindungsgemässen Abdichtungsvorrichtung zur Abdichtung heisser Medien kann gemäss einer anderen Weiterbildung ein den Dichtungsraum und eine Wärmetauscheinrichtung einschliessender Umwälzkreislauf für das Druckfluid vorgesehen sein, um dieses und damit die von ihm beaufschlagten Teile zu kühlen. Insbesondere lässt sich hierdurch gleichzeitig eine Kühlung des Magnetspaltes der Spalttopf-Magnetkupplungen bzw. Spaltrohrmotoren als auch der im Dichtungsraum vorzugsweise untergebrachten Lageranordnungen zur Lagerung der Antriebswelle erzielen. Im übrigen wird bezüglich anderer Weiterbildungen der Erfindung auf die Patentansprüche verwiesen.

Gemäss einem anderen Aspekt wird durch die Erfindung eine Pumpe mit einer gegenüber einem Pumpengehäuse abgedichteten Antriebswelle für ein Pumpenlaufrad bereitgestellt, die sich durch das Merkmal im kennzeichnenden Teil des Patentanspruches 10 auszeichnet.

Die Erfindung wird nachfolgend anhand von Ausführungsformen und der Zeichnung näher erläutert. Es zeigen:

Fig. 1 in längsgeschnittener Ansicht eine Kreiselpumpe mit einer Abdichtungsvorrichtung gemäss einer ersten Ausführungsform der Erfindung,

Fig. 2 eine Ansicht ähnlich Fig. 1 einer modifizierten Ausführungsform der in Fig. 1 gezeigten Abdichtungsvorrichtung,

Fig. 3 in längsgeschnittener Ansicht eine Abdichtungsvorrichtung gemäss einer weiteren Ausführungsform der Erfindung, und

Fig. 4 eine Ansicht ähnlich Fig. 3 einer modifizierten Ausführungsform der in Fig. 3 gezeigten Abdichtungsvorrichtung.

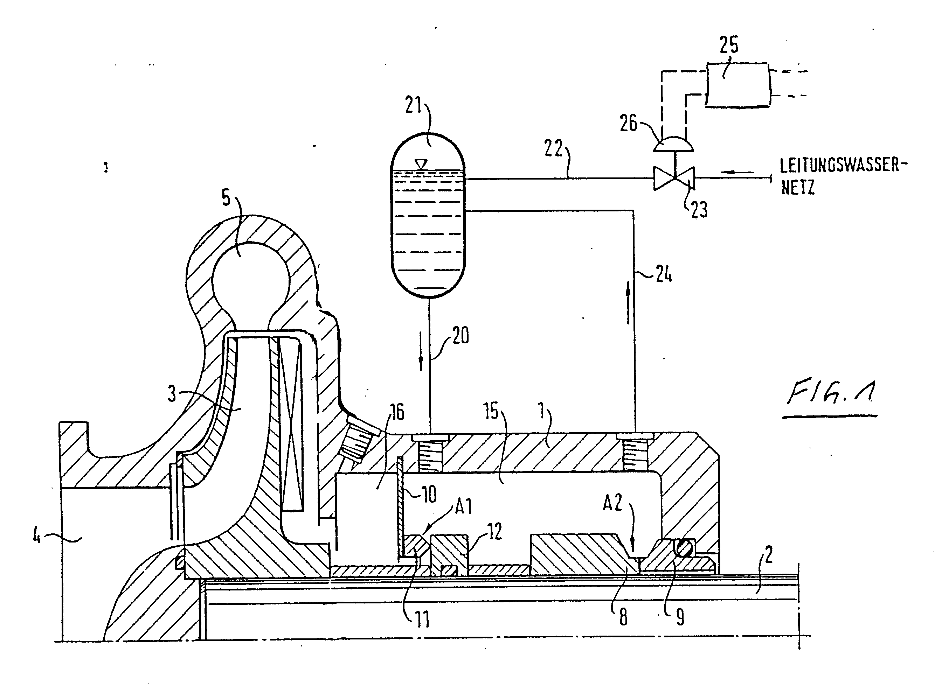

Wie in Fig. 1 dargestellt ist, umfasst die Pumpe ein Gehäuse 1 mit einer darin angeordneten in nicht näher gezeigter Weise gelagerten Antriebswelle 2, an der endseitig ein Pumpenlaufrad 3 befestigt ist. Das Fördermedium gelangt über einen axialen Gehäuseeinlass 4 zum Laufrad 3 und wird von diesem in einen Ringraum 5 gefördert, der mit einem nicht gezeigten Gehäuseauslass in Verbindung steht. Der vorbeschriebene Aufbau der Pumpe ist grundsätzlich bekannt, so dass sich die Beschreibung weiterer Details erübrigt.

Erfindungsgemäss ist die Antriebswelle 2, wie dargestellt, gegenüber dem Gehäuse 1 durch ein Paar beabstandete Dichtungsanordnungen A1, A2 abdichtet, die zwischen sich einen Dichtungsraum 15 einschliessen und diesen gegenüber der Aussenumgebung im wesentlichen hermetisch abdichten.

Vorzugsweise handelt es sich bei den Dichtungsanordnungen A1, A2 um Gleitringdichtungen, wobei insbesondere die atmosphärenseitige äussere Gleitringdichtung A2 einen herkömmlichen Aufbau, bestehend aus einem am Gehäuse 1 dichtend gehaltenen stationären Dichtungsteil 9 und einem zusammen mit der Welle 2 rotierenden Dichtungsteil 8, aufweisen kann. Bezüglich weiteren Details von geeigneten atmosphärenseitigen Gleitringdichtungen kann auf den Katalog "Gleitringdichtungen" der Anmelderin der vorliegenden Anmeldung verwiesen werden.

Die produktseitige, innere Gleitringdichtung A1 umfasst dagegen einen mit einem rotierenden Dichtungsteil 12 zusammenwirkenden stationären Dichtungsteil 11, der, wie dargestellt, an einer scheibenförmigen biegsamen Membran 10 befestigt ist, welche ihrerseits im Pumpengehäuse 1 in geeigneter Weise gehalten ist. Die Membran 10 bildet nicht nur eine flexible Trennwand, um den von den Dichtungsanordnungen A1, A2 eingeschlossenen Dichtungsraum 15 produktseitig abzutrennen, sondern schafft darüber hinaus eine bestimmte Vorspannkraft, mit der die Dichtfläche des stationären Dichtungsteiles 11 gegen die Dichtfläche des rotierenden Dichtungsteiles 12 vorgespannt ist. Die Dichtfläche des stationären Dichtungsteiles 11 kann, wie dargestellt, schneidenartig ausgebildet sein, um der Ablagerung von kohäsiven und adhäsiven Schichten auf der gegenüberliegenden Dichtfläche des rotierenden Dichtungsteiles 12 entgegenzuwirken.

Die von der Membran 10 auf das stationäre Dichtungsteil 11 der produktseitigen Dichtungsanordnung A1 ausgeübte Vorspannkraft ist so gewählt, dass dieser Dichtungsteil 11 unter einem bestimmten im Dichtungsraum 15 herrschenden Druck aus der dichtenden Eingriffnahme mit dem zugehörigen beweglichen Dichtungsteil 12 gelangt, indem die Membran 10 in Richtung auf einen produktseitigen Vorraum 16 federt, und damit eine Verbindung zwischen dem Dichtungsraum 15 und dem Vorraum 16 zustande kommt.

In den durch die Dichtungsanordnungen A1, A2 begrenzten Dichtungsraum 15 kann erfindungsgemäss ein unter dem bestimmten oder einem höheren Druck stehendes Druckfluid in gezielter Weise eingeleitet werden. Beim Druckfluid handelt es sich vorzugsweise um Leitungswasser, doch können, wenn erwünscht, auch andere geeignete, insbesondere nicht korrosive Flüssigkeiten verwendet werden.

Das Druckfluid wird bei der gezeigten Ausführungsform über eine Zuführleitung 22, vorzugsweise unter Zwischenschaltung eines Vorrats- oder Pufferbehälters 21, und eine Leitung 20 in den Dichtungsraum 1 eingeleitet und kann, nachdem es den Dichtungsraum 15 im wesentlichen axial durchströmt hat, über eine Rückführleitung 24 zurück in den Vorratsbehälter 21 strömen.

In der Zuführleitung 22 ist ein Absperrventil 23 vorgesehen, bei dem es sich vorzugsweise um ein elektrisch aufgrund von Steuersignalen einer bei 25 angedeuteten Steuereinrichtung betätigbares Ventil handelt. An der Steuereinrichtung 25 können beispielsweise für den Betrieb des Pumpenantriebsmotors (nicht gezeigt) kennzeichnende Signale anliegen. Wenn erwünscht, kann ferner dem Absperrventil 23 ein Zeitglied 26 zugeordnet oder ein solches in der Steuereinrichtung 25 integriert sein, um ein zeitversetztes Öffnen und Schliessen des Absperrventiles im Verhältnis zu bestimmten Betriebsphasen der Pumpe, z.B. beim An- bzw. Abfahren, zu bewirken. Es versteht sich, dass die Steuereinrichtung 25 ein Öffnen und Schliessen des Absperrventil in jeder gewünschten Weise auslösen kann, um das Druck- oder Spülfluid zu jedem gewünschten Zeitpunkt und über jedes beliebige Zeitintervall vor, während oder nach dem Betrieb der Pumpe in den Dichtungsraum 15 einzuführen.

Während der Betriebsphase der Pumpe, bei der das Absperrventil 23 geschlossen ist, kann ferner vorgesehen sein, dass das im Dichtungsraum 15 befindliche im wesentlichen drucklose Fluid durch Konvektion oder mittels einer nicht gezeigten Umwälzpumpe längs der Leitung 24, dem Vorratsbehälter 21 und der Leitung 20 in Umlauf gehalten und z.B. durch einen nicht gezeigten Wärmetauscher zum Zwecke der Kühlung geführt wird. Hierdurch lässt sich eine wirksame Kühlung der Dichtungsanordnungen A1, A2 bewerkstelligen, was insbesondere von Vorteil ist, wenn die atmosphärenseitige äussere Dichtungsanordnung A2 in anderer Weise als in Gestalt der gezeigten Gleitringdichtung, z.B. als Spalttopf ausgebildet ist, worauf im übrigen nachfolgend noch näher eingegangen wird.

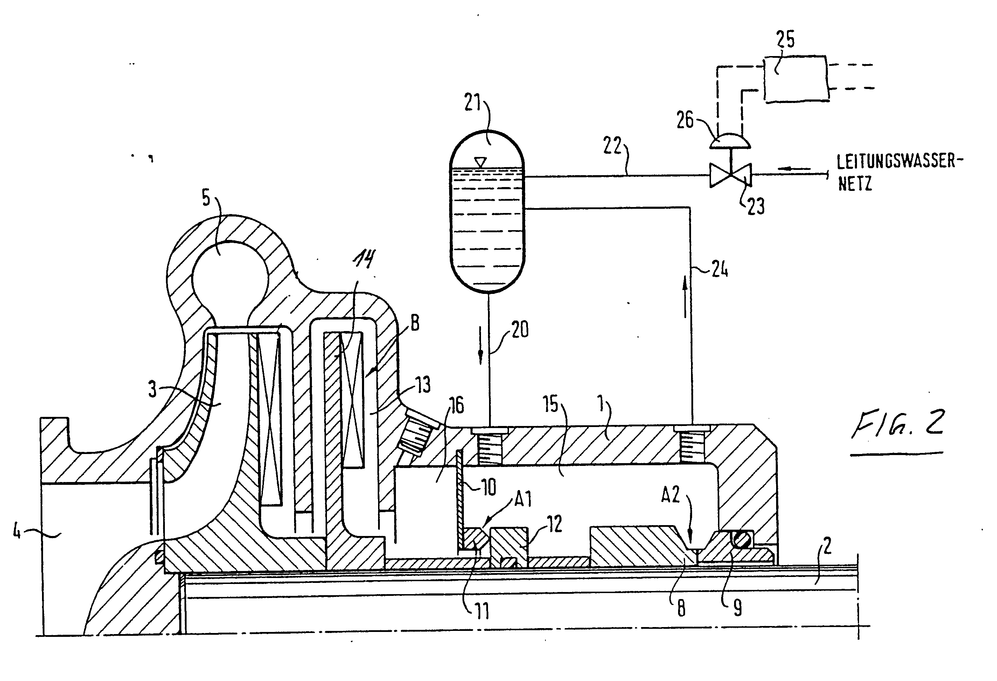

Die Abdichtungsvorrichtung nach Fig. 2 unterscheidet sich von der vorbeschriebenen Ausführungsform im wesentlichen nur dadurch, dass den Dichtungsanordnungen A1, A2 produktseitig ausserdem eine hydrodynamische Dichtungsanordnung B vorgeschaltet ist, die bei Betrieb der Pumpe einen Zufluss des Fördermediums zu den Dichtungsanordnungen A1, A2 verhindert oder wenigstens wesentlich einzuschränken vermag.

Die hydrodynamische Dichtungsanordnung B kann einen herkömmlichen Aufbau haben und umfasst, wie dargestellt, ein auf der Antriebswelle 2 befestigtes, z.B. aufgekeiltes Laufrad 14, das in einer Gehäuseausnehmung 13 rotiert und an seiner produktabgewandten Seite Schaufeln trägt, die eine Förderung des Mediums in eine Richtung weg vom Vorraum 16 und damit den Dichtungsanordnungen A1, A2 bewirken. Bei Betrieb der Pumpe wird daher das aus dem Pumpraum zuströmende Fördermedium ständig zurück in den Pumpraum bewegt, so dass der Vorraum 16 im wesentlichen frei vom Fördermedium gehalten werden kann.

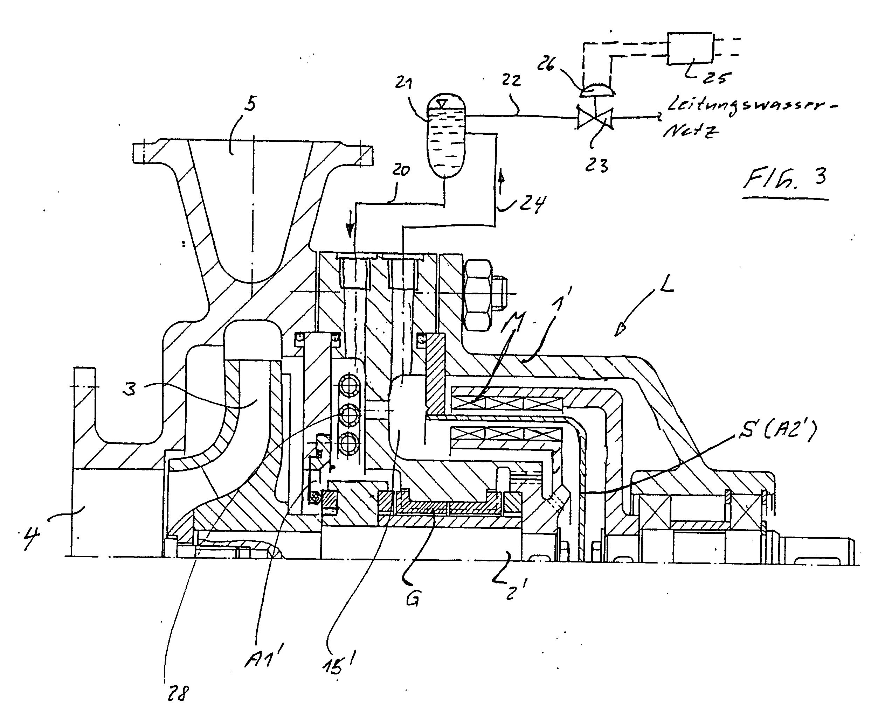

Die in Fig. 3 gezeigte Ausführungsform einer erfindungsgemässen Abdichtungsvorrichtung unterscheidet sich von der Ausführungsform nach Fig. 1 dadurch, dass das das allgemeine Bezugszeichen 1′ tragende mehrteilige Pumpengehäuse einen in der Zeichnung rechten Antriebs- und Lagerbereich L umfasst, der im wesentlichen in dem von den Dichtungsanordnungen A1′, A2′ begrenzten Dichtungsraum 15′ untergebracht ist. Der Antriebs- und Lagerbereich L enthält eine Gleitlageranordnung G, die die Antriebswelle 2′ gegenüber dem Gehäuse 1′ abstützt. Der Antriebs- und Lagerbereich L umfasst ferner eine Magnetkupplung M mit einem Spalttopf S, der bei der vorliegenden Ausführungsform die atmosphärenseitige Dichtungsanordnung A2′ bildet.

Die Magnetkupplung M kann einen grundsätzlich herkömmlichen Aufbau mit an- und abtriebsseitigen Magnetanordnungen haben, welche mit dem Gehäuse 1′ bzw. der Antriebswelle 2′ verbunden sind. Zur atmosphärenseitigen Abdichtung der Pumpe ertreckt sich im Ringspalt zwischen den Magnetanordnungen der rohrförmige Abschnitt des Spalttopfes S, der eine hermetische Abdichtung des Inneren des Antriebs- und Lagerbereiches L gegenüber der Aussenumgebung schafft.

Die produktseitige Dichtungsanordnung A1′ enspricht hinsichtlich Aufbau und Funktion im wesentlichen der produktseitigen Dichtungsanordnung A1 der vorbeschriebenen Ausführungsform nach Fig. 1 und 2, so dass hierauf bezüglich weiterer Details verwiesen werden kann.

Die Erfindung ermöglicht nicht nur eine Spülung der verschleissempfindlichen Dichtungs- und Pumpenteile mittels des ins Innere des Dichtungsraumes 15′ eingeführten Druckfluides, sondern auch die Errichtung eines vom Fördermedium unabhängigen Kühl- und Schmierkreislaufes für die Gleitlageranordnung G und Magnetkupplung M. Dazu kann, wie in Fig. 3 dargestellt ist, eine von einem geeigneten Kühlmedium durchströmte Wärmetauscheinrichtung 28 im Dichtungsraum 15′ oder, wenn erwünscht, an einer aussenliegenden Stelle vorgesehen sein. Im übrigen wird bezüglich weiterer Details der Abdichtungsvorrichtung auf die Ausführungsform nach Fig. 1 verwiesen.

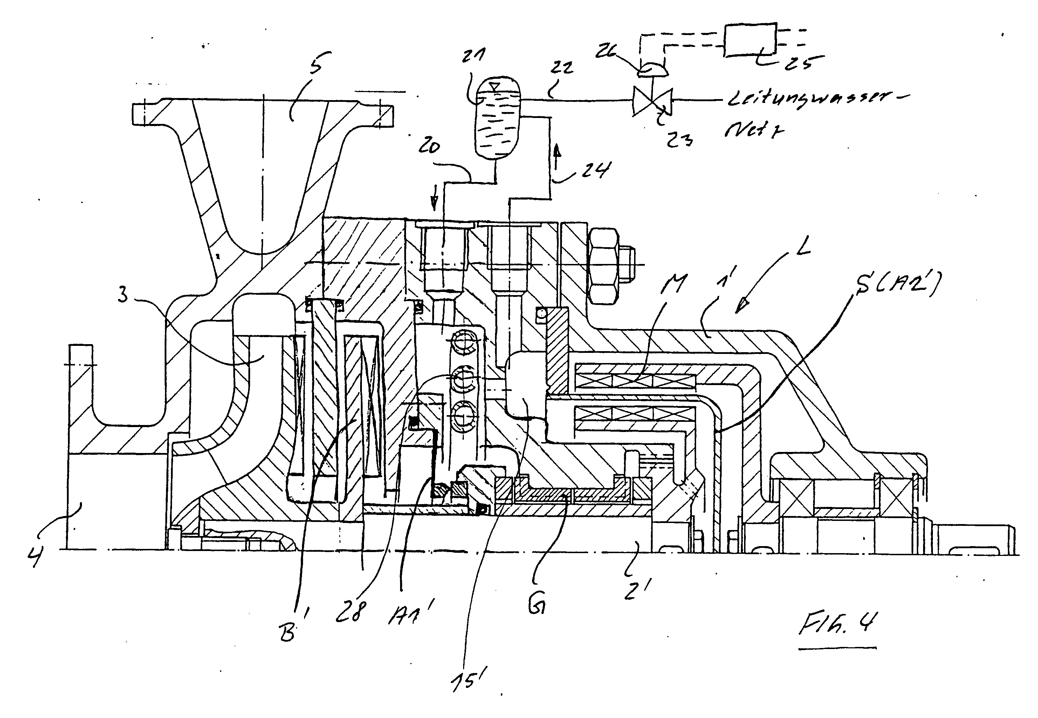

Die Ausführungsform nach Fig. 4 unterscheidet sich von der vorhergehenden im wesentlichen nur dadurch, dass der produktseitigen Dichtungsanordnung A1′ zusätzlich eine hydrodynamische Dichtungsanordnung B′ entsprechend der Ausführungsform nach Fig. 2 vorgeschaltet ist.

Vorausgehend wurde die Erfindung anhand von Ausführungsformen mit einer biegsamen scheibenförmigen Membran 10 als Teil der Einrichtung zur Schaffung einer druckabhängigen Verbindung zwischen dem Dichtungsraum und dem produktseitigen Vorraum beschrieben. Anstelle einer biegsamen Membran könnte auch eine den stationären Teil der produktseitigen Dichtungsanordnung in geeigneter Weise beaufschlagende Feder in Verbindung mit einer starren Trennwand vorgesehen sein, um die Vorspannkraft aufzubringen. Wenn es bei gewissen Anwendungsfällen nur auf eine Durchspülung der produktseitigen Gehäusebereiche, nicht jedoch der betreffenden Dichtungsanordnung ankommt, kann auch ein Absperrventil in einer im wesentlichen starren Trennwand zwischen Dichtungsraum und Vorraum vorgesehen sein, das eine Strömung des Druckfluides bei dem bestimmten oder höheren Druck vom Dichtungsraum in den Vorraum ermöglicht, jedoch in umgekehrter Richtung verhindert. Darauf hinzuweisen ist ferner, dass das erfindungsgemässe Dichtungsprinzip nicht auf Pumpen beschränkt ist.

**Ansprüche**

1. Vorrichtung zum Abdichten einer Welle gegenüber einem Gehäuse, gekennzeichnet durch beabstandete, zwischen sich einen Dichtungsraum (15) einschliessende Dichtungsanordnungen (A1,A2), eine Einrichtung (10), die bei Überschreiten eines bestimmten Druckes im Dichtungsraum, der gleich oder grösser als der abzudichtende Druck ist, eine Verbindung zwischen dem Inneren des Dichtungraumes und einem produktseitigen Aussenbereich (16) schafft und bei einem Druck im Dichtungsraum unterhalb des bestimmten Druckes die Verbindung verhindert, und eine Einrichtung (20-25) zum gesteuerten Einleiten eines Druckfluides in den Dichtungsraum (15), so dass das Druckfluid bei einem Druck, der gleich oder grösser als der bestimmte Druck ist, aus dem Dichtungsraum (15) in den produktseitigen Aussenbereich (16) einführbar ist.

2. Vorrichtung nach Anspruch 1, dadurch gekennzeichnet, dass wenigstens die produktseitige Dichtungsanordnung (A1) eine Gleitringdichtung (11,12) umfasst, und dass wenigstens ein Teilstrom des Druckfluides unter dem bestimmten Druck längs der Gleitringdichtung aus dem Dichtungsraum (14) in den produktseitigen Aussenbereich (16) führbar ist.

3. Vorrichtung nach Anspruch 2, dadurch gekennzeichnet, dass ein Dichtungsteil (11) der produktseitigen Gleitringdichtung gegen den anderen Dichtungsteil (12) vorgespannt ist, und dass die Gleitringdichtung so ausgelegt ist, dass die Dichtungsteile unter dem bestimmten Druck im Dichtungsraum (15) gegen die Vorspannkraft ausser dichtendem Eingriff miteinander bewegbar sind.

4. Vorrichtung nach Anspruch 3, dadurch gekennzeichnet, dass der stationäre Dichtungsteil (11) der produktseitigen Gleitringdichtung durch eine den Dichtungsraum (15) produktseitig abtrennende federnde Membran (10) unter Vorspannung gegen den beweglichen Dichtungsteil (12) gehalten ist.

5. Vorrichtung nach einem der vorhergehenden Ansprüche, dadurch gekennzeichnet, dass die atmosphärenseitige Dichtungsanordnung (A2)′ eine Spalttopf-Magnetkupplungsanordnung umfasst.

6. Vorrichtung nach einem der Ansprüche 1 bis 4, dadurch gekennzeichnet, dass die atmosphärenseitige Dichtungsanordnung (A2) einen Spaltrohr-Motor umfasst.

7. Vorrichtung nach einem der vorhergehenden Ansprüche, dadurch gekennzeichnet, dass den Dichtungsanordnungen (A1,A2) produktseitig eine hydrodynamische Dichtungsanordnung (B) vorgeschaltet ist.

8. Vorrichtung nach Anspruch 1, dadurch gekennzeichnet, dass die Einrichtung (20-25) zum gesteuerten Einführen des Druckfluids so ausgelegt ist, dass das Druckfluid im wesentlichen nur während einer bestimmten Zeitdauer oder Betriebsphase der abzudichtenden Einrichtung in den Dichtungsraum (15) eingeführt wird.

9. Vorrichtung nach Anspruch 1, gekennzeichnet durch einen den Dichtungsraum (15) und eine Wärmetauscheinrichtung einschliessenden Umwälzkreislauf zur Kühlung des im Dichtungsraum (15) anstehenden Druckfluides.

10. Pumpe mit einer gegenüber einem Pumpengehäuse abgedichteten Antriebswelle für ein Pumpenlaufrad, gekennzeichnet durch eine Abdichtungsvorrichtung nach einem der vorhergehenden Ansprüche.

FIG.1

25

26

LEITUNGSWASSER-
NETZ

21

22

23

24

20

16

15

1

10

A1

A2

12

11

8

9

3

5

4

2

EP 0 386 315 A1

FIG. 2

Leitungswasser-Netz

FIG. 3

EP 0 386 315 A1

Fig. 4

Europäisches Patentamt

**EUROPÄISCHER RECHERCHENBERICHT**

Nummer der Anmeldung

EP 89 11 8006

| | EINSCHLÄGIGE DOKUMENTE | | |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl.5 )** |
| X | EP-A-265264 (WINSLOW)<br>* Spalte 1, Zeilen 27 - 63 *<br>* Spalte 2, Zeile 36 - Spalte 3, Zeile 35; Figur * | 1-4 | F04D29/12<br>F16J15/40<br>F16J15/16 |
| X | FR-A-1033185 (GUINARD)<br>* das ganze Dokument * | 1-3 | |
| A | DE-A-3337086 (KRAMER)<br>* Zusammenfassung; Figur 2 * | 1, 5 | |
| A | GB-A-1241955 (SPEEDWELL)<br>* Seite 1, Zeilen 9 - 61 *<br>* Seite 3, Zeile 127 - Seite 4, Zeile 5 *<br>* Seite 4, Zeilen 44 - 116; Figuren 3, 5 * | 1, 7 | |
| A | US-A-2903970 (ELOVITZ)<br>* Spalte 1, Zeilen 23 - 36 *<br>* Spalte 3, Zeilen 11 - 26 *<br>* Spalte 4, Zeile 40 - Spalte 5, Zeile 14; Figur * | 1, 8 | **RECHERCHIERTE SACHGEBIETE (Int. Cl.5 )** |
| A | FR-A-2607874 (ALSTHOM)<br>* Zusammenfassung; Figur 5 * | 1, 9 | F04D<br>F16J |

Der vorliegende Recherchenbericht wurde für alle Patentansprüche erstellt

| Recherchenort | Abschlußdatum der Recherche | Prüfer |
|---|---|---|
| DEN HAAG | 05 JUNI 1990 | ZIDI K. |